# EUROPEAN PATENT SPECIFICATION

(11) **EP 0 437 865 B1**
(45) Date of publication and mention of the grant of the patent: **16.04.1997**
(21) Application number: 90200128.8
(22) Date of filing: 18.01.1990
(51) Int. Cl.: G11B 20/18

(54) **Storage device for reversibly storing digital data on a multitrack storage medium, a decoding device, an information reproducing apparatus for use with such storage medium, and a unitary storage medium for use with such storage device, decoding device and/or information reproducing device**
Aufzeichnungsvorrichtung zum umkehrbaren Speichern von digitalen Daten auf einem Mehrspuren-Aufzeichnungsträger, Dekodiervorrichtung, Informationswiedergabegerät für die Verwendung mit einem solchen Aufzeichnungsträger und Aufzeichnungsträger für die Verwendung mit einer solchen Aufzeichnungsvorrichtung, mit einer solchen Dekodiervorrichtung und/oder mit einem solchen Informationswiedergabegerät
Dispositif de stockage pour le stockage réversible de données numériques sur un support d'enregistrement multi-piste, dispositif de décodage, appareil de reproduction d'information à utiliser avec un tel support d'enregistrement, et support de stockage à utiliser avec un tel dispositif de stockage , avec un tel dispositif de décodage et/ou avec un tel appareil de reproduction d'information

(43) Date of publication of application: 24.07.1991
(73) Proprietor: Philips Electronics N.V., 5621 BA Eindhoven (NL)
(72) Inventor: Lokhoff, Gerardus Cornelis Petrus, NL-5656 AA Eindhoven (NL)
(74) Representative: Strijland, Wilfred

(56) References cited:
- EP-A- 0 146 639
- EP-A- 0 169 540
- JOURNAL OF THE AUDIO ENGINEERING SOCIETY, vol. 32, no. 9, September 1984, pages 647-658, New York, US; N. SAKAMOTO et al.: "Signal processing of the compact- cassette digital recorder"
- TRANSACTIONS OF THE I.E.C.E. OF JAPAN, vol. E69, no. 6, June 1986, pages 740- 749, Tokyo, JP; K. TANAKA et al.: "Application of generalized product code for stationary-head type professional digital audio recorder"
- PATENT ABSTRACTS OF JAPAN, vol. 7, no. 152 (P-208)[1297], 5th July 1983;& JP-A-58 62 807
- ELECTRONIC COMPONENTS & APPLICATIONS, vol. 8, no. 3, 1988, pages 145-152, Eindhoven, NL; R. FINCK et al.: "Third-generation decoding ICs for CD players"

## Description

### FIELD OF THE INVENTION

The invention relates to a storage device for storing digital data on a multitrack storage medium. In particular, the medium may be a magnetic cassette tape that has a plurality of parallel tracks. Alternatively, the "tracks" could be successive revolutions of what is effectively a spiral on a disk, such as an optical recording disk. Storage of digital data is notoriously sensitive against mutilation, that may be operative both on the level of any arbitrary bit, or be represented by long strings of bits along a particular track that have a high error probability. BCH codes over finite fields have proven advantageous error protection vehicles, in particular Reed-Solomon codes defined for multi-symbol words, each symbol being an 8-bit element of a Galois field, the codes being systematic on the symbol level. The ordinary-skilled technician could do away with various ones of these restrictions without deviating from the general concept of the invention.

In particular, the invention relates to a storage device for storing digital data on a storage medium with a first plurality of substantially uniform and contiguous storage tracks, under execution of an error protection encoding operation by means of a block code consisting of Cl-code words, in a first direction and of C2-code words in a second direction, said device having first encoding means for said first code to generate error protected C1 code words each assigned to a particular single track, second encoding means for said second code to generate error protected C2 code words each assigned to all of said first plurality of tracks, and means for separating the symbols of a code words.

A device of this kind has been disclosed in Tanaka, et al, "Application of Generalized Product Code for Stationary-Head Type Professional Digital Audio Recorder", Transactions of the IECE of Japan, 1986, No.6, p.740-746, of which by way of example, Figure 8 is being considered. The reference proposes such two dimensional block code format as a sub-class of generalized product codes, that however, has lost the characteristics of a product code format, which have been defined in the exemplary text book references presented hereinafter.

The present invention has considered the advantageous properties of a classical product code, both in terms of error protectivity and in terms of decoding effort, for realizing an appropriate degree of protection at a reasonable complexity of encoding and decoding and realizing such protection in a regular format. Now according to one of its aspects, the invention provides such device, characterized in that all user symbols and redundant symbols of the C1 code words and C2 code words have a uniform multibit size, in that said block code is a product code, in that each C2 code word has a number of symbols that is an exact multiplicity of said first plurality of tracks, and which symbols are assigned to said first plurality of tracks according to a multiply recurrent and uniform cycle along their particular C2 code words, and in that said device has physical disposition means for disposing each C2 code word so that among symbols of the latter C2 code word spacings between physically neighbouring symbols are substantially uniform in size and have non-zero components both along said tracks and across said tracks.

In particular, the storage format so attained offers robustness against row errors that afflict a large fraction of the data on any single track and column errors, that could afflict a plurality of code symbols that in principle are written simultaneously, if writing skew is ignored. Furthermore, robustness against drop-out patches of the medium is so realized.

By way of background, the following references on product codes are proposed:
Richard E. Blahut, Theory and Practice of Error Control Codes, p.282-285, Addison-Wesley 1984
W.W.Peterson and E.J. Weldon, Error-Correcting Codes, p.131-133, MIT 1972.
These references do not consider particular applicability for multitrack recording.

Advantageously, among said non-zero components the cross-track component derives from a uniform cross track jump between successive symbols of said C2 code word which is an integer number of tracks modulo said first plurality, said integer number also being relatively prime to said first plurality.
This allows for easy address calculations.

Advantageously, among said non-zero components the along-track component derives from a uniform-along-track jump between successive symbols of said C2 code word.

This further simplifies address calculation.
Preferably, write means are provided for magnetically writing in parallel tracks that are tape tracks. By itself, fine quality tape allows so for high-density storage and high-rate transfer.

Preferably, the write means interface to the plurality of tracks as mutually contiguous tracks. This makes relative positioning superfluous and further raises attainable storage density.

Preferably, the first plurality of tracks is disposed on half of said tape and within said first plurality of tracks an outer edge track on said tape is fully filled with parity symbols that each pertain to an associated C2 code word.
Outer tracks are slightly more susceptible to mutilation and in consequence, overall susceptibility is diminished.

Preferably, each track has a sequence of blocks, each block containing a uniform integer number of C1 code words, and wherein said integer number is 2 and within any block its C1 code words are 2-interleaved.
This raises the uniformity of the storage organization.

Preferably, abstracted from tape skew the physical disposition of C1 words among said first plurality of tracks is mutually synchronous.
This lowers requirements for buffering in the write electronics.

Preferably, abstracted from tape skew the physical disposition of said blocks among said first plurality of tracks is mutually synchronous, and on each track a second plurality of blocks is contained in a tape segment of uniform size, a third plurality of tape segments is contained in a tape frame of second uniform size, said tape segments and tape frames being mutually synchronous among said first plurality of tracks, and any said C2 code word being fully contained in a single tape frame.
This further raises the uniformity of storage organization.

Preferably, mutually synchronous blocks among said tracks constitute a slice, and wherein each C2 code word is uniformly distributed over all slices of a frame.
This further improves uniformity.

Preferably, there is provided a RAM encoding memory accommodating storage of a fourth plurality of tape segments, to wit an input RAM segment for therein receiving user data of an intended tape segment, a further RAM segment series for therein storing user data of a corresponding set of intended tape segments and for therein encoding associated C1 and C2 code words and an output RAM segment for therefrom outputting a fully encoded tape segment.
Whereas the C2 code words may be distributed over a plurality of RAM segments, and C1 code words over a single segment, the total storage capacity required is only two RAM segments more than the number covered by the extension of the C2 code words.

Preferably, the first plurality is equal to 8. This is a good trade-off between high transfer rate and moderate apparatus complexity.

Preferably, said C1 code is a (24, 20, 5) code and said C2 code is a (32, 26, 7) code. These codes, in particular as combined in a product code, provide immunity against a wide range of errors. Nevertheless, the mathematical complexity of executing correction and/or detection of errors remains simple. In particular, odd-distance codes were found to team up better than even-distance codes, even if the codes now have rather different distances.

Preferably, each frame comprises 384 C2 code words. In this, simple organization and large capacity of storage are balanced.

Preferably, the non-zero component across said tracks derives from a jump +5 modulo said first plurality.
This allows for simple address processing.

Preferably, the medium is a reversible storage medium. In addition to magnetics, also state of the art optical storage would be usefull.

Preferably, the device would comprise reception means for an analog audio signal, analog to digital conversion means fed by said reception means for by A/D conversion providing at least a substantial part of said digital data for subsequent encoding by said product code. Direct audio to coded-data conversion provides an effective countermeasure to interference by external disturbances.

Advantageously, such reader device comprises a multisegment RAM memory, filling means for sequentially filling a predetermined second plurality of RAM segments with data from said real or emulated storage medium, wherein any C1 code word is exclusively assigned to one single RAM segment, and any C2 code word is exclusively assigned to a single one multisegment RAM frame, in that any C2 code word runs with a uniform row jump and uniform column jump through said RAM frame modulo the dimensions of said RAM frame. This represents a relatively low requirement for storage capacity.

Advantageously, each memory segment comprising its multisegment RAM memory, wherein each RAM segment accommodates a uniform third plurality of C1 code words that is uniformly distributed among said first plurality of tracks as relating exclusively to a single medium segment, so that any storage medium segment fits 1:1 on a RAM segment, and further provided with first decode means for upon filling of each memory segment directly activating decoding of any C1 code word available in said memory segment.
Fast activation of the decoding diminishes the time lag between reading and reproducing of stored information.

Advantageously, upon storage said C2 code words cross intra-memory segment boundaries up to a third plurality of memory segments but no other intra-memory segment boundaries, and said apparatus having second decoding means for after storing of said C2 code words in said third plurality of memory segments and decoding by said first decode means activating decoding said C2 code words.
Such time lag by means of this stratagem is kept low as well.

Advantageously, said memory accommodates in addition to said third plurality of memory segments, one further input segment for inputting data of one storage medium segment and one second further segment for outputting data of one already decoded storage medium segment.
For example, a four-sgement frame now only requires a six-segment memory. The above advantages now clearly have their counterparts in the storage device mentioned earlier.

The invention also relates to an information reproducing device and containing a decoding device as recited supra, comprising holding/driving means for said storage medium in the form of a magnetic tape, head means for time-sequentially accessing a stretch of locations on said tape, and audio reproduction means fed by said decoding device. Such device would represent a price-effective consumer entertainment apparatus for general use. In particular, the decoder part thereof could well be contained in a single-chip embodiment.

The invention also relates to a magnetic tape for use with a decoding device as described supra, and comprising said first plurality of substantially uniform storage tracks, said tracks comprising a storage frame which is equally distributed over said parallel tracks that are single-sidedly disposed on one half of said a magnetic tape, said frame being protected by a symbol-correcting block product code as represented by C1 words and C2 words, each C1 word being disposed within exactly one of said tracks, each C2 word being disposed over all of said tracks in that said C2 word has a number of symbols that is an exact multiplicity of said first plurality, and which symbols are assigned to said plurality of tracks according to a multiply recurrent and uniform cycle along their particular C2 code words and in that physical spacing among neigbhouring symbols of the latter C2 word is substantially uniform and has non-zero components both along said tracks and across said tracks.

The invention also relates to a storage medium as described supra and contained in a cassette that interfaces to an apparatus also described hereinbefore. Such cassette would still further rise the physical integrity of the storage.

Various advantageous aspects are recited in dependent Claims.

### BRIEF DESCRIPTION OF THE DRAWING

The invention will be explained in detail hereinafter, with respect to a preferred embodiment that is shown in the appended Figures. In particular, first the data format and associated decoding and, vice versa, encoding procedures are explained. Thereafter the error protection code format will be discussed in detail. Now, in the Figures:
Figure 1 shows a main data tape frame format according to the invention;
Figure 2 is a block diagram of a reader device according to the invention, that with few modifications changes to an encoding storage device;
Figure 3 schematically shows RAM segment accessing in such device;
Figure 4 shows the data mapping on the tape;
Figure 5 shows the same in RAM;
Figures 6, 6A show the disposition of a C2 word on tape;
Figure 7 further illustrates the use of the present invention;
Table 1 formalizes the mapping of user data on the tape.

### DESCRIPTION OF A PREFERRED EMBODIMENT

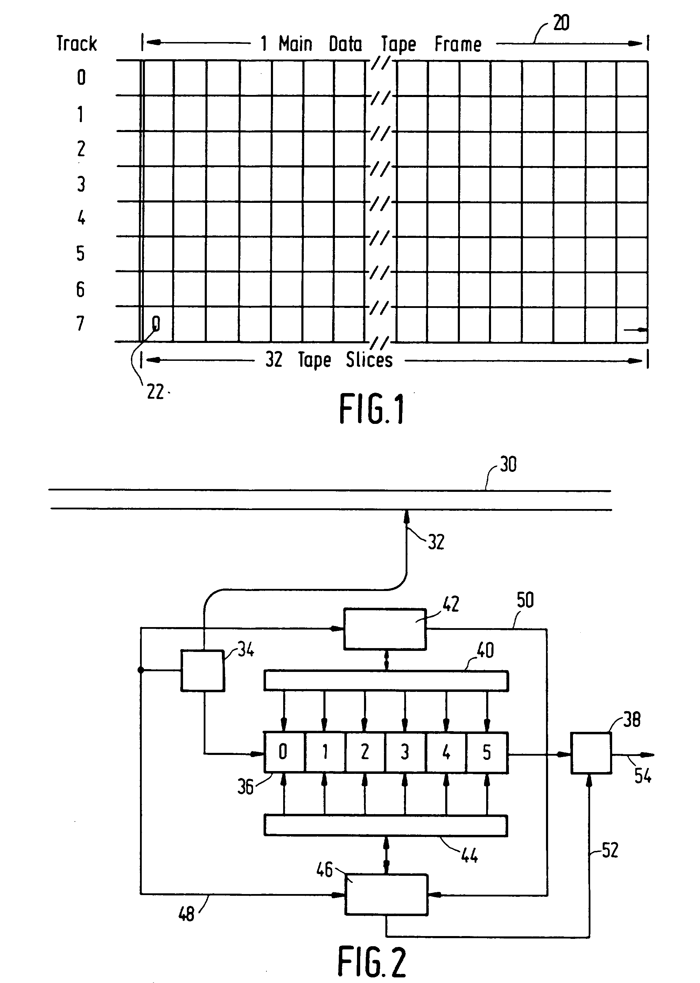

Figure 1 exemplifies the main data allocation, that is user data plus associated redundancy data. Further, in this respect, Table 1 formalizes the mapping of user data onto the tape. The user bytes (or symbols) are numbered sequentially. Their internal organization is not considered; they could, however, derive from digitized single-channel or double-channel audio, video, or other. Each byte D has three indexes t, b, i, namely track number t in [0,7], tape block number b in [0,31], and symbol number within a block in [0,47]. The number of user main data bytes in a tape frame is 8192. The placement of these bytes according to their placement number u in [0,8191] is found with the formulae of Table 1. Use is made of two intermediate variables d, e, wheren e in effect is the segment number and d the number-within-the-segment in question. In addition 128 system information symbols may be accommodated to give a total of 8320 non-redundant symbols within the product code block. The RAM to be discussed hereinafter, has 32 columns of 384 rows each for accommodating 12288 symbols. The number of redundant symbols is thus 12288-8320=3968 symbols. This number is lower than the sum of the redundant symbols of each of the C1 code words and C2 code words because several redundant symbols are part of two code words. This in fact is the principal of a product code.

Now, as shown in Figure 1, for storage on tape, eight tracks 0..7 are provided. The data, inclusive of redundant error-protection data, is carried in units called tape frames. Each tape frame, indicated by arrow 20, covers all eight tracks. Each tape frame is divided into 32 consecutive tape slices shown as columns. Each tape slice contains 8 tape blocks, that is one tape block for each track. Also, one tape frame is divided into four frame segments that each contain 8 consecutive slices of the tape frame in question. These frame segments have not been indicated in the Figure. One tape block 22 corresponds to 408 unmodulated main data bits, that are modulated into 510 channel bits. For brevity, the modulating into channel bits has not been detailed further and the consideration hereinafter only applies to the unmodulated bits. On the tape, corresponding tape blocks of different tracks are aligned as shown. Each tape block consists of a sync-pattern of 10 bits, a number-indication symbol of 8 unmodulated bits, and a parity symbol of 8 unmodulated bits which leaves 48 body symbols. The subsequent consideration restricts to the latter 48 symbols per block, 48x32x8=3x2¹²=12288 per frame. The code used will be discussed hereinafter.

### DESCRIPTION OF A DECODER APPARATUS

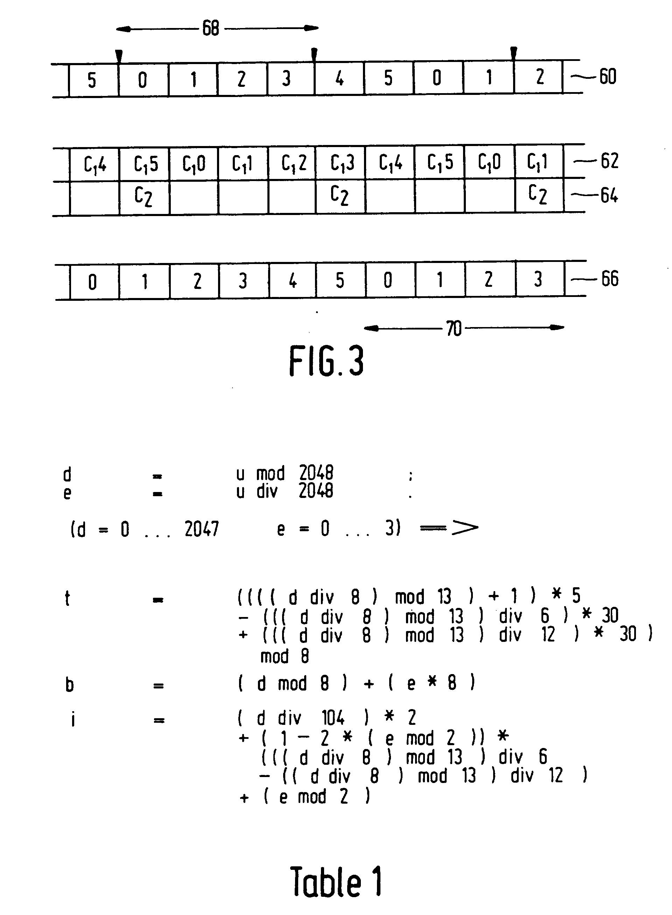

Figure 2 is a block diagram of a decoder apparatus embodiment. The tape 30 is read simultaneously in eight parallel tracks by tape access mechanism 32 which also executes the demodulating. Block 34 driven by synchronization mechanism not shown, counts off bytes, segments, and frames. RAM 36 comprises six RAM segments or pages that are numbered 0-5. It is fed by counting block 34 that provides write addresses by successive incrementation and also gates the data to RAM 36. Likewise, counting block 38 gates data read out from RAM 36 unto user line 54 and provides read addresses by successive incrementation. In this way RAM 36 is a first-in-first-out buffer with respect to the user data. As symbolically shown, block 42 is the C1 decoder that bidirectionally accesses RAM 36 via its access facility 40. Likewise, block 46 is the C2 decoder that bidirectionally accesses RAM 36 via its own access facility 44. In this respect, Figure 3 schematically shows the segment-wise accessing of RAM 36 by write counter/gate mechanism 34. Inasmuch as time goes from left to right in the Figure, all six RAM-pages are filled or overwritten in cyclical sequence. The physical disposition of the segments in the RAM structure is of no consequence to the decoding organization. In Figure 3, row 62 shows the decoding operation by C1 decoder 42. Decoder 42 receives a synchronizing signal from counter/gate mechanism 34 on line 48 and in consequence, knows the instant on which a complete segment has been filled in RAM 36 and also its address (range). Now inasmuch as each C1 code word of 24 symbols (bytes) is completely contained within in one tape segment and each tape segment is one-to-one mapped on a single RAM segment, the C1 decoding can be effected directly on the most recently received tape segment. As shown in row 62, this leads to a cyclical sequence that is delayed by one segment interval with respect to row 60. Furthermore, inasmuch as each C2 code word of 32 symbols is completely contained within one tape frame of four tape segments and each tape frame by means of the segment mapping is one-to-one mapped on four consecutive RAM segments, the C2 decoding can be effected directly on the four segments after the last thereof has been received, provided that the C1 decoder has finished its operation (regardless of whether the correction has been successfull or not). In row 60, small arrows indicate the frame boundaries. As shown on row 64, the C2 decoding is effected during a single segment interval following the complete reception of the frame in question. As shown in Figure 2, C2 decoder 46 is also synchronized by counter/gate 35 via line 48, and moreover, receives "ready" signal from C1 decoder 42 on line 50. When the C2 decoder has finished its operation, line 52 may carry a "free" signal to output counter/gate 38. Alternatively, the latter is unconditionally synchronized via a signal on line 48. Row 66 shows that the operation of C2 decoder 46 is followed by the read access on four consecutive RAM segments that had been treated during the most recent operation of C2 decoder 46. Thus, the four tape segments received through interval 68 are outputted through interval 70. In consequence the whole arrangement of Figure 2 functions as an error correction FIFO with an incurred delay of five tape segment intervals. It is clear that six RAM segments are necessary and sufficient for the storage. If the C2 decoding were to take more time, for example two or three tape segment intervals, the storage requirements would amount to seven or eight RAM segments, respectively. In Figure 2 RAM 36 has a four-port facility. Inasmuch as decoders 42, 46 function alternatively, their respective operations may be mapped on a single hardware facility that is suitably programmed. Moreover, inasmuch as writing by counter/gate element 34, reading by counter/gate element 38 and decoding by decoders 42, 46 never take place on the same RAM segment, on a segment level RAM 36 may be limited to a one-port facility.

The set-up described above may comprise a reset functionality not shown which is activated, for example, upon recognition of the correct accessing of the first frame. This may be signalled by the first frame start encountered after block headers have begun to show up correctly. Furthermore, as described infra, the C1 code words are confined to one respective block only. In consequence this could be used to a slight further acceleration in that C1 decoding would start directly after the associated block. Estimation of the operation has revealed that additional cost of a more complicated control arrangement would not outweigh additional benefits.

The arrangement of Figure 2 has been described as relating to decoding, of data read from tape to be presented on user output 54. A rather similar arrangement could be used with respect to encoding, inasmuch as the C1 encoding would be segment-wise effected by block 42, after which the frame-wise C2 encoding would be effected by encoder 46. The changes to be implemented would be: line/element 32 should interface to a user, line 54 to the tape. Alternatively, line/element 32 is rendered bidirectional, as well as line 54, but the inputting to the RAM gets a multiplexer that is either fed by line 32 or by line 54. Conversely, the output of the RAM gets a demultiplexer to either line 54 or line 32. As another modification, the redundancy generating is somewhat easier than decoding, so elements 42, 46 could be simplified. For example, no feed-back operation is necessary, wherein an unexpected outcome, such as an uncorrectable error in a C2 word, would necessitate other measures to be taken. The combined symbol correcting codes yield a product code system. This means that for encoding the time sequence of encoding the two codes is inconsequential: after the user data of a whole segment has arrived in RAM, either the C1 code words could have their redundancy calculated first, or, alternatively, first the C2 code words. Conceptually, the user data of a product code can be visualized as a matrix. The redundancy consists of three parts:
a. redundant symbols along the rows
b. redundant symbols along the columns
c. doubly redundant symbols along the redundant columns, which is identical to doubly the redundant symbols along the redundant rows.

Further considerations as to the reading also apply to the writing. For simplicity, various electromechanical considerations have not been presented, such as the holding/driving of the tape, feedback looping with velocity, head construction. Details of RAM addressing will be described infra.

### DESCRIPTION OF THE ERROR PROTECTION FORMAT

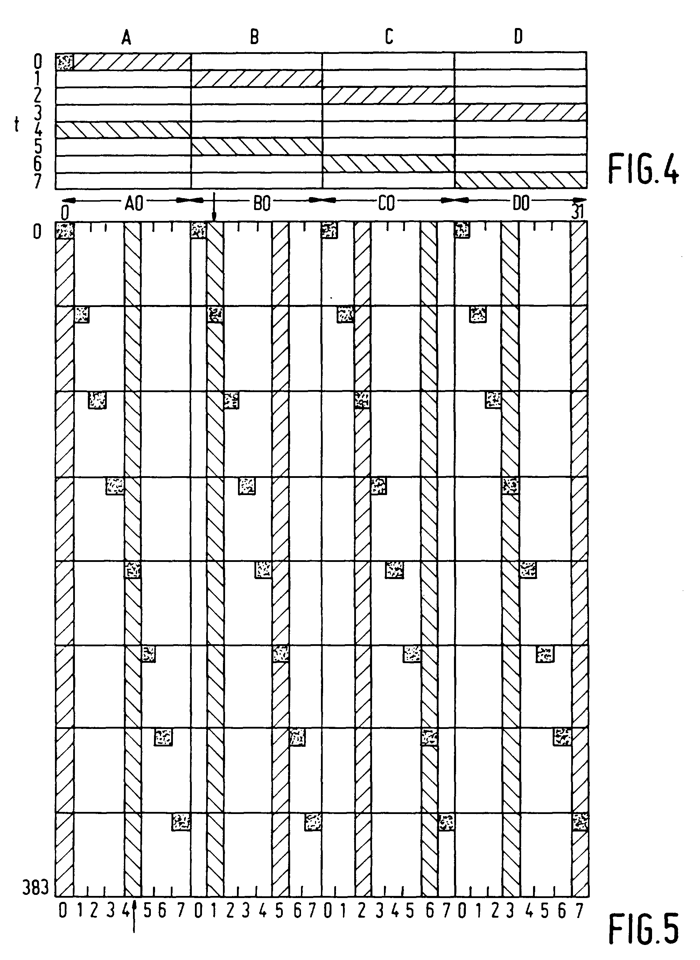

Figure 4 shows the data mapping on the tape, in particular one frame with its four tape segments A. . D, each tape segment having respective equal-sized fractions thereof disposed on each of eight tracks 0..7. Within each tape segment, two respective track segments have been shown hatched in such way that on each track one track segment has been shown hatched.

Now, Figure 5 shows the data mapping of the same tape frame in four RAM segments A0, B0, C0, D0 wherein the total content of one tape segment has been mapped exclusively on the like-indicated RAM segment, such as A-to-A0. The two remaining RAM segments according to Figures 2, 3, may left out of consideration with respect to the tape frame in question, because they do not contribute to the product code of the frame now under consideration. It should be noted that whereas the vertical scale in Figure 4 (track numbers) corresponds to the horizontal scale in Figure 5 (memory columns within each respective RAM segment as shown at the lower edge), the horizontal scale in each tape segment of Figure 4 has been expanded vertically in Figure 5 for better clarity, as represented by the larger area of Figure 5 as compared to that of Figure 4. Now, the representation of Figure 5 has been chosen to illustrate the logical structure of the storage arrangement. In practice, physical constraints, in particular, available address ranges, may lead to a physical setup that is different, but which may be attained by an elementary address transposition. Now, first, Figure 5 shows the mapping of each of the hatched track segments of Figure 4 on a column of the corresponding RAM segment, while retaining the orientation of the hatching. The RAM as shown has 32 columns 0..31 and 384 (=8x48) rows (0..383), each location so numbered accommodating one symbol. As shown, the mapping is one to one, the column number with in the RAM segment being equal to (t∗5)mod 8 + 8. The column number in the complete RAM is then found by adding 8 times the segment number, which for RAM segments A0, B0, C0, D0 is 0, 1, 2, 3, respectively. Always, t is the track number. For example, for t=5 in tape segment B, the column number in RAM sector B0 is (5x5)mod8=1, as shown by an arrow. The mapping in the other direction is the same inasmuch as track 1 is mapped on column 5, within RAM segment B0.

Second, the disposition of the C1 code words in the RAM is considered. Now, each block, of 408 unmodulated bits, has two (2) C1 code words of 24 symbols each (and three other symbols, not relevant here). The two code words have a 2-interleave in that odd-numbered symbols belong to one code word and even-numbered symbols belong to the other. This also applies to the eight redundant symbols within each block, which are the last symbols of the block (right hand most in Figure 1) on the tape. In consequence, in RAM they fill the lowest eight rows of each set of 48 rows.

Third, the disposition of a C2 code word in RAM is considered. Figure 5 shows one particular code word that starts with the symbol on row 0, column 0. Thereafter, the row jump is 48 and the column jump is one. In consequence, each next symbol relates to a different track. Further, each next symbol jumps by one block in the direction of the tape track. The cross track jump is plus (+) five tracks modulo 8 (without carry or borrow). For the one code word in question, all symbols have been highlighted in Figure 5 as dark squares. Transposition to other code words is effected by shifting all symbols over a uniform number of rows (with rotation between the upper and lower edges) and/or over a second uniform number of columns (with rotation between the left and right edges).

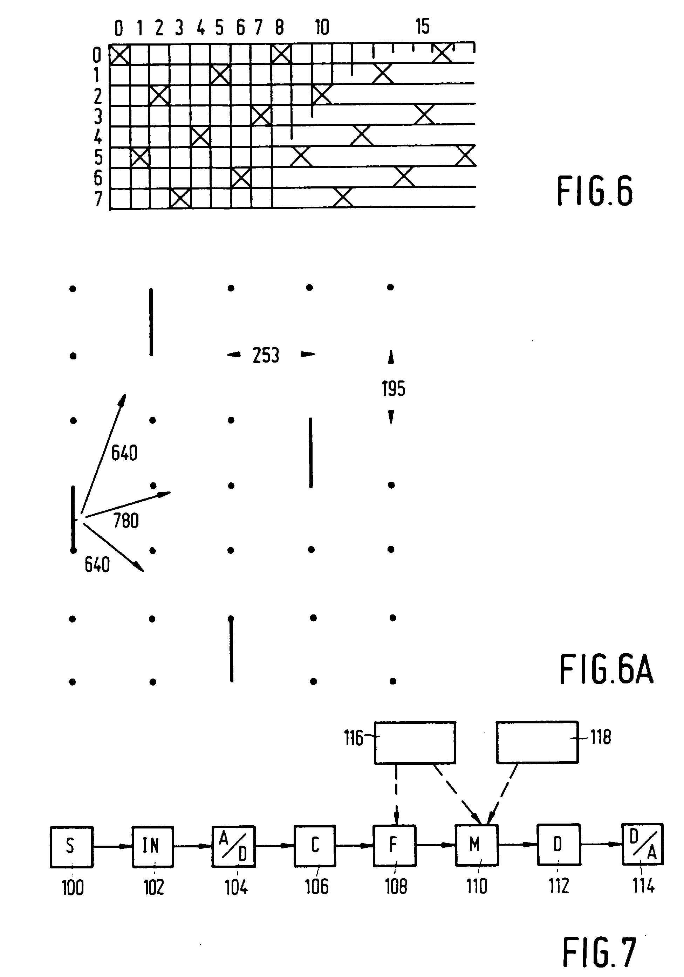

In this respect, Figure 6 shows the disposition of the first 18 symbols of the C2 code word highlighted in Figure 5, each cross now representing one symbol of the block of 48 symbols in question. Each next symbol now is in a next tape block column, and shifted over five tape tracks (mod 8) without carry or borrow. For simplicity, the position of the respective symbols within their associated block has not been shown. As clearly visible, on a block basis the physical distance between neigbhouring code symbols is substantially uniform. In a typical embodiment, envisaged tape speed is 4.76 cms/sec at a bit rate of 96 kilobits per second. This results in a bit length of 0.495 micron. Track pitch was intended as 195 microns, which means that in such longitudinal recording the bit area is substantially shorter than wide. Now, each tape block has 510 channel bits which gives a block length of 253 microns, which means that the area covered by a block is 253x195 microns which is considered approximately square. Thus the uniform distance of Figure 6 would effectively translate to a substantially uniform distance between respective neighbouring code symbols of a C2 code word. In this respect, Figure 6A shows the center-to-center distances between neighbouring symbols of a C2 code word in the three possible relative dispositions. The symbols are shown as vertical bars within their blocks of which only the corners have been indicated by dots. The relative distances of 640, 780 microns relate as 1:1.22. Other relationships, such as up to 1:1.3 or even up to 1:1.4 could be considered as yielding a substantially uniform distance between nearest neighbours. The Figure takes into account that the code symbols within their respective blocks have identical positions. The uniform distance implies a good robustness of the code against scratches and other burst-type errors. In effect the C2 code, having a distance of 7, at six redundant symbols (n,k=32,26) may correct up to six erasure symbols per word. This applies in case the C1 code would have provided pointers to all mutilated symbols of the word in question. In that case a circle encompassing such six symbols in Figure 6 at 100% erasure therein would not cause breakdown of the error correction capability. In Figure 6 this would correspond to the width of some six blocks on a row, which is 1,5 millimeter, which is considered sufficient for almost every purpose. Even in case the lay-out were to be changed to disk-type storage, the same advantageous properties were realizable, provided that the ratio of the diameter of the outer track to that of the inner track were substantially equal to one. In practice, a ratio of 1-1 or even somewhat more would be readily acceptable.

A further measure to increase robustness of the code format, is that track number 0 has been filled completely with redundant symbols of the C2 code; in the highlighted code word of Figure 5, this implies all code symbols (4) on the top row of the RAM memory, having symbol numbers 0, 8, 16, 24. The same applies to all other C2 code words inasmuch as the first symbol thereof is always assigned to the leftmost segment column. Furthermore, the other parity symbols have the following rank: for even-numbered C2 code words (0, 2 .. 382) they are positioned at symbols 7,23. For odd-numbered C2 code words (1, 3 .. 383) the further redundant words are positioned at symbols 15,31. This means that all those other redundant symbols are mapped on track 3, which is now 50% covered with parity symbols.

The advantage of filling track 0 completely with redundant symbols can be seen as follows. The set of eight tracks discussed earlier, at about 1.2 millimeters wide, covers one half width of a 1/8" tape. For reverse use, a second set of tracks is provided in the same format the other half width of the tape. Now, both tracks 0 run at the outer edges of the recording track proper and thus, generally are somewhat more exposed to mutilating interference, tape wear, etcetera. Now in case the outer track be the only one mutilated, the remaining data integrity would be upheld, as signalled by correct performance of the C2 code, whereas the C1 code would signal irrepairibility for the outer track.

Figure 7 illustrates the use of the present invention in its various embodiments and representations. Block 100 is a source for analog audio signals. This may be, for example an audio record player, a loud-speaker, or a naturally occurring audio source, such as an orchestra. Block 102 represents an audio input to the system, such as a microphone or wire connection, plus its associated audio amplification, filtering etcetera. Block 104 represents the analog to digital conversion of audio samples taken from element 102. Block 106 represents the encoding as referred to earlier, complete with digital processing provisions, encoding RAM. Block 108 represents a formatting element for the encoded data, thereby generating the tape segments. These can be outputted in various different ways, such as in parallel by 8 mode. Alternatively, such parallel 8-bit bytes may be serialized to single bit width for broadcast, cable or optical wave guide transmission. Block 110 represents the broadcast amplifier, broadcast medium and broadcast receiver combined. Alternatively, such elements may be adapted for cable or wave-guide use. Still more alternatively, magnetic head for writing and reading, respectively inclusive of the magnetomotoric storage on digital audio tape. The audio tape, or, alternatively, audio disk may be housed in a cassette of suitable box-like or envelope-like dimensions, shaped according to protective needs, storage requirements, accessibility and commercial promotivity. If required, read head(s) and write head(s) may be integrated or even combined into a single head or head set. Block 112 represents the decoder device together with decoding RAM. Block 114 represents an output mechanism, comprising D/A conversion, de-interleaving, amplification and loudspeaking as far as required. Block 116 represents a driving mechanism at the production side of the encoded data, for example as a tape drive. Block 118 represents a likewise organized driving mechanism at the reception side for the encoded data. In certain commercial organizations, such as a reversible recorder the driving mechanisms could be integrated to a single driving mechanism. For brevity, various constructional and organizational details have been foregone. It should be noted that the production side operates as if the reception side were present indeed, and as such emulates presence of the receiving side: it operates as if the receiving side were present. Likewise, the receiving side emulates the transmission side: it operates as if the transmission side were present.

## Claims

1. A storage device for storing digital data on a storage medium with a first plurality of substantially uniform and contiguous storage tracks, under execution of an error protection encoding operation by means of a block code consisting of Cl-code words, in a first direction and of C2-code words in a second direction, said device having first encoding means for said first code to generate error protected C1 code words each assigned to a particular single track, second encoding means for said second code to generate error protected C2 code words each assigned to all of said first plurality of tracks, and means for separating the symbols of a code word, characterized in that all user symbols and redundant symbols of the C1 code words and C2 code words have a uniform multibit size, in that said block code is a product code, in that each C2 code word has a number of symbols that is an exact multiplicity of said first plurality of tracks, and which symbols are assigned to said first plurality of tracks according to a multiply recurrent and uniform cycle along their particular C2 code words, and in that said device has physical disposition means for disposing each C2 code word so that among symbols of the latter C2 code word spacings between physically neighbouring symbols are substantially uniform in size and have non-zero components both along said tracks and across said tracks.

2. A device as claimed in Claim 1 wherein among said non-zero components the cross-track component derives from a uniform cross track jump between successive symbols of said C2 code word which is an integer number of tracks modulo said first plurality, said integer number also being relatively prime to said first plurality.

3. A device as claimed in Claim 2, wherein the along-track component derives from a uniform-along-track jump between successive symbols of said C2 code word.

4. A device as claimed in Claim 1, 2 or 3, and having write means for magnetically writing in parallel onto said tracks that are tape tracks.

5. A device as claimed in Claim 4 wherein said write means interface to said plurality of tracks as mutually contiguous tracks.

6. A device as claimed in Claim 5, wherein said first plurality of tracks is disposed on half of said tape and within said first plurality of tracks an outer edge track on said tape is fully filled with parity symbols that each pertain to an associated C2 code word.

7. A device as claimed in any of Claims 1 to 6, wherein each track has a sequence of blocks, each block containing a uniform integer number of C1 code words.

8. A device as claimed in Claim 7, wherein said integer number is 2 and within any block its C1 code words are 2-interleaved.

9. A device as claimed in any of Claims 1 to 8, wherein abstracted from tape skew the physical disposition of C1 words among said first plurality of tracks is mutually synchronous.

10. A device as claimed in Claim 7 or 8, wherein abstracted from tape skew the physical disposition of said blocks among said first plurality of tracks is mutually synchronous, and on each track a second plurality of blocks is contained in a tape segment of uniform size, a third plurality of tape segments is contained in a tape frame of second uniform size, said tape segments and tape frames being mutually synchronous among said first plurality of tracks, and any said C2 code word being fully contained in a single tape frame.

11. A device as claimed in Claim 10, wherein mutually synchronous blocks among said tracks constitute a slice that has a single block per track, and wherein each C2 code word is uniformly distributed over all slices of a frame.

12. A device as claimed in Claim 10 or 11 and having a RAM encoding memory accommodating storage of a fourth plurality of tape segments, to wit an input RAM segment for therein receiving user data of an intended tape segment, a further RAM segment series for therein storing user data of a corresponding set of intended tape segments and for therein encoding associated C1 and C2 code words and an output RAM segment for therefrom rom outputting a fully encoded tape segment.

13. A device as claime din any of Claims 1 to 12, wherein said first plurality is equal to eight.

14. A device as claimed in any of Claims 1 to 13, wherein said C1 code is a (24, 20, 5) code and said C2 code is a (32, 26, 7) code.

15. A device as claimed in any of Claims 1 to 14, wherein each frame comprises 384 C2 code words.

16. A device as claimed in any of Claims 1 to 15, wherein the non-zero component across said tracks derives from a jump +5 modulo said first plurality.

17. A device as claimed in any of Claims 1 to 16, wherein said storage medium is a reversible storage medium.

18. A device as claimed in any of Claims 1 to 17 further comprising reception means for an analog audio signal, analog to digital conversion means fed by said reception means for by A/D conversion providing at least a substantial part of said digital data for subsequent encoding by said product code.

19. A decoding device for use with said storage device having a first plurality of substantially uniform tracks, as claimed in any of Claims 1 to 18, said device comprising access means for accessing said storage medium, internal storage means for accommodating all data contained within a first set of C1 code words and within a second set of C2 code words, said first and second set together constituting a smallest product code block, first decoding means for decoding said C1 code words in said first set, second decoding means for thereafter decoding said C2 code words in said second set, and said second decoding means having accessing means for in decoding any particular single C2 code word accessing said storage means as corresponding to physically on-medium positions that have substantially uniform neighbour-to-neighbour distances, any said distance having non-zero components both along said tracks and across said tracks, whilst the symbols of said C2 code word are assigned to all of said plurality of tracks according to a recurrent cycle along successive symbols of any particular C2 code word, in that any C2 code word has a number of symbols that is an exact multiplicity of said plurality of tracks.

20. A decoding device for use with a device as claimed in any of Claims 1 to 19 or as part of a device as claimed in Claim 19, comprising a multisegment RAM memory, filling means for sequentially filling a predetermined second plurality of RAM segments with data from said real or emulated storage medium, wherein any C1 code word is exclusively assigned to one single RAM segment, and any C2 code word is exclusively assigned to a single one multisegment RAM frame, in that any C2 code word runs with a uniform row jump and uniform column jump through said RAM frame modulo the dimensions of said RAM frame.

21. A decoding device as claimed in Claim 19 or 20, and comprising its multisegment RAM memory, wherein each RAM segment accommodates a uniform third plurality of C1 code words that is uniformly distributed among said first plurality of tracks as relating exclusively to a single medium segment, so that any storage medium segment fits 1:1 on a RAM segment, and further provided with first decode means for upon filling of each memory segment directly activating decoding of any C1 code word available in said memory segment.

22. A decoding device as claimed in Claim 21, wherein upon storage, said C2 code words cross intra-memory segment boundaries up to a third plurality of memory segments but no other intra-memory segment boundaries, and said apparatus having second decoding means for after storing of said C2 code words in said third plurality of memory segments and decoding by said first decode means activating decoding said C2 code words.

23. A decoding device as claimed in Claim 22, wherein said memory accommodates in addition to said third plurality of memory segments, one further input segment for inputting data of one storage medium segment and one second further segment for therefrom outputting data of one already decoded storage medium segment.

24. An information reproducing apparatus containing a decoding device according to any of Claims 18 to 23, holding/driving means for said storage medium in the form of a magnetic tape, head means for time-sequentially accessing a stretch of locations on said tape, and audio reproduction means fed by said decoding device.

25. A magnetic tape for use with a decoding device according to any of Claims 19 to 23 or with an apparatus as claimed in Claim 24, and comprising said first plurality of substantially uniform storage tracks, said tracks comprising a storage frame which is equally distributed over said parallel tracks that are single-sidedly disposed on one half of said a magnetic tape, said frame being protected by a symbol-correcting block product code as represented by C1 words and C2 words, each C1 word being disposed within exactly one of said tracks, each C2 word being disposed over all of said tracks in that said C2 word has a number of symbols that is an exact multiplicity of said plurality, of tracks, and which symbols are assigned to said plurality of tracks according to a multiply recurrent and uniform cycle along their particular C2 code word and in that physical spacing among neigbhouring symbols of the latter C2 word is substantially uniform and has non-zero components both along said tracks and across said tracks.

26. A storage medium as claimed in Claim 25 wherein said frame for each of it tracks comprises a uniform number of blocks which under absence of tape skew are organized in synchronized slices, symbols of any particular C2 word observing a slice jump of one slice and a cross-track-jump of a uniform third number of tracks modulo the number of said plurality.

27. A storage medium as claimed in Claim 26, wherein said blocks occupy substantially square areas on said tape.

28. A storage medium as claimed in Claim 26, wherein each C2 word consists of a number of symbols that is equal to the number of blocks in any single-track part of a tape frame.

29. A storage medium as claimed in Claim 28, wherein each block consists of a uniform number of C1 code words.

30. A storage medium as claimed in Claim 29, wherein said C1 code words are 2-interleaved.

31. A storage medium as claimed in any of Claims 25 to 30 and contained in a cassette that interfaces to an apparatus as claimed in Claim 24.

## Patentansprüche

1. Speichereinrichtung zum Speichern digitaler Daten auf einem Speichermedium mit einer ersten Vielzahl nahezu uniformer und zusammenhängender Speicherspuren unter Ausführung einer Fehlerschutzcodierungsoperation mittels eines in einer ersten Richtung aus C1-Codewörtern und in einer zweiten Richtung aus C2-Codewörtern bestehenden Blockcodes, wobei die Einrichtung erste Codierungsmittel für den genannten ersten Code hat, um fehlergeschützte C1-Codewörter zu generieren, die jeweils einer speziellen einzelnen Spur zugewiesen sind, zweite Codierungsmittel für den genannten zweiten Code, um fehlergeschützte C2-Codewörter zu generieren, die jeweils allen aus der genannten ersten Vielzahl von Spuren zugewiesen sind, und Mittel zum Separieren der Symbole eines Codewortes, dadurch gekennzeichnet, daß alle Benutzersymbole und redundante Symbole der C1-Codewörter und C2-Codewörter eine uniforme Mehrbitgröße haben, daß der genannte Blockcode ein Produktcode ist, daß jedes C2-Codewort eine Anzahl Symbole hat, die eine genaue Vielfachheit der genannten Vielzahl von Spuren ist, und diese Symbole der ersten Vielzahl von Spuren gemäß einem mehrfach wiederholten und uniformen Zyklus entlang ihren speziellen C2-Codewörtern zugewiesen sind, und daß die genannte Einrichtung physikalische Anordnungsmittel zum Anordnen jedes C2-Codewortes aufweist, so daß unter den Symbolen des letzteren C2-Codewortes Abstände zwischen physikalisch benachbarten Symbolen nahezu größenuniform sind und entlang den genannten Spuren und quer zu diesen Spuren Komponenten ungleich null haben.

2. Einrichtung nach Anspruch 1, bei der unter den genannten Komponenten ungleich null die Komponente quer zur Spur aus einem uniformen Sprung quer zur Spur zwischen aufeinanderfolgenden Symbolen des genannten C2-Codewortes herrührt, der eine ganze Zahl von Spuren modulo der genannten ersten Vielzahl ist, wobei die genannte ganze Zahl mit der genannten ersten Vielzahl auch keinen gemeinsamen Faktor hat.

3. Einrichtung nach Anspruch 2, bei der die Komponente entlang der Spur aus einem uniformen Sprung entlang der Spur zwischen aufeinanderfolgenden Symbolen des genannten C2-Codewortes herrührt.

4. Einrichtung nach einem der Ansprüche 1, 2 oder 3 mit Schreibmitteln, um parallel auf die genannten Spuren, die Bandspuren sind, magnetisch zu schreiben.

5. Einrichtung nach Anspruch 4, bei der die genannten Schreibmittel mit der genannten Vielzahl von Spuren als aneinanderhängende Spuren gekoppelt sind.

6. Einrichtung nach Anspruch 5, bei der die genannte erste Vielzahl von Spuren auf der Hälfte des genannten Bandes angeordnet ist und innerhalb der genannten ersten Vielzahl von Spuren eine äußere Randspur auf dem genannten Band vollständig mit Paritätssymbolen gefüllt ist, die jeweils zu einem assoziierten C2-Codewort gehören.

7. Einrichtung nach einem der Ansprüche 1 bis 6, bei der jede Spur eine Folge von Blöcken hat, wobei jeder Block eine uniforme ganze Zahl von C1-Codewörtern enthält.

8. Einrichtung nach Anspruch 7, bei der die ganze Zahl 2 ist und innerhalb jedes Blockes dessen C1-Codewörter 2-verschachtelt sind.

9. Einrichtung nach einem der Ansprüche 1 bis 8, bei der, abgesehen vom Bandschräglauf, die physikalische Anordnung von C1-Wörtern innerhalb der genannten ersten Vielzahl von Spuren synchron ist.

10. Einrichtung nach Anspruch 7 oder 8, bei der, abgesehen vom Bandschräglauf, die physikalische Anordnung der genannten Blöcke innerhalb der ersten Vielzahl von Spuren synchron ist und auf jeder Spur eine zweite Vielzahl von Blöcken in einem Bandsegment uniformer Größe enthalten ist, eine dritte Vielzahl von Bandsegmenten in einem Bandrahmen einer zweiten uniformen Größe enthalten ist, wobei die Bandsegmente und Bandrahmen innerhalb der genannten ersten Vielzahl von Spuren zueinander synchron sind und wobei jedes C2-Codewort vollständig in einem einzigen Bandrahmen enthalten ist.

11. Einrichtung nach Anspruch 10, bei der zueinander synchrone Blöcke innerhalb der genannten Spuren einen Abschnitt bilden, der einen einzigen Block pro Spur hat, und bei der jedes C2-Codewort über alle Abschnitte eines Rahmens uniform verteilt ist.

12. Einrichtung nach Anspruch 10 oder 11, die einen RAM-Codierspeicher hat, der die Speicherung einer vierten Vielzahl von Bandsegmenten beherbergt, nämlich ein Eingangs-RAM-Segment, um darin Benutzerdaten eines geplanten Bandsegments zu speichern, eine weitere RAM-Segmentfolge, um darin Benutzerdaten eines entsprechenden Satzes geplanter Bandsegmente zu speichern und um darin assoziierte C1- und C2- Codewörter zu codieren, und ein Ausgangs-RAM-Segment, um daraus ein vollständig codiertes Bandsegment auszugeben.

13. Einrichtung nach einem der Ansprüche 1 bis 12, bei der die genannte erste Vielzahl gleich acht ist.

14. Einrichtung nach einem der Ansprüche 1 bis 13, bei der der C1-Code ein (24, 20, 5)-Code und der C2-Code ein (32, 26, 7)-Code ist.

15. Einrichtung nach einem der Ansprüche 1 bis 14, bei der jeder Rahmen 384 C2-Codewörter umfaßt.

16. Einrichtung nach einem der Ansprüche 1 bis 15, bei der die Komponente ungleich null quer zu den Spuren aus einem Sprung +5 modulo der genannten ersten Vielzahl herrührt.

17. Einrichtung nach einem der Ansprüche 1 bis 16, bei der das genannte Speichermedium ein reversibles Speichermedium ist.

18. Einrichtung nach einem der Ansprüche 1 bis 17 mit weiterhin Empfangsmitteln für ein analoges Audiosignal und mit von den genannten Empfangsmitteln gespeisten Analog-Digital-Umsetzungsmitteln, um durch A/D-Umsetzung zumindest einen wesentlichen Teil der genannten digitalen Daten zum anschließenden Codieren durch den genannten Produktcode zu verschaffen.

19. Decodiereinrichtung zur Verwendung mit der genannten Speichereinrichtung mit einer ersten Vielzahl nahezu uniformer Spuren, wie nach einem der Ansprüche 1 bis 18, wobei die Einrichtung Zugriffsmittel für den Zugriff auf das Speichermedium umfaßt und interne Speichermittel zum Unterbringen aller in einem ersten Satz C1-Codewörter und in einem zweiten Satz C2-Codewörter enthaltener Daten, wobei der erste und der zweite Satz zusammen einen kleinsten Produktcodeblock bilden, sowie erste Decodierungsmittel zum Decodieren der genannten C1-Codewörter in dem ersten Satz sowie zweite Decodierungsmittel, um danach die genannten C2-Codewörter in dem zweiten Satz zu decodieren, wobei die genannten zweiten Decodierungsmittel Zugriffsmittel haben, um beim Decodieren eines beliebigen einzelnen C2-Codewortes auf die genannten Speichermittel zuzugreifen, so wie sie physikalischen Positionen auf dem Medium entsprechen, die im wesentlichen uniforme Abstände von Nachbar zu Nachbar haben, wobei jeder beliebige genannte Abstand Komponenten ungleich null zu beiden Seiten entlang den Spuren und quer zu den Spuren hat, während die Symbole des genannten C2-Codewortes allen aus der genannten Vielzahl von Spuren gemäß einem wiederholten Zyklus entlang aufeinanderfolgenden Symbolen eines beliebigen C2-Codewortes zugewiesen werden, indem jedes C2-Codewort eine Anzahl Symbole hat, die ein genaues Vielfaches der Vielzahl von Spuren ist.

20. Decodiereinrichtung zur Verwendung mit einer Einrichtung nach einem der Ansprüche 1 bis 19 oder als Teil einer Einrichtung nach Anspruch 19, mit einem Mehrsegment-RAM-Speicher, Füllmitteln zum sequentiellen Füllen einer zuvor bestimmten zweiten Vielzahl von RAM-Segmenten mit Daten aus dem genannten realen oder emulierten Speichermedium, bei dem jedes C1-Codewort ausschließlich einem einzigen RAM-Segment zugewiesen wird und jedes C2-Codewort ausschließlich einem einzigen Mehrsegment-RAM-Rahmen zugewiesen wird, indem jedes C2-Codewort mit einem uniformen Zeilensprung und einem uniformen Spaltensprung durch den RAM-Rahmen modulo den Abmessungen des genannten RAM-Rahmens verläuft.

21. Decodiereinrichtung nach Anspruch 19 oder 20, und mit ihrem Mehr-segment-RAM-Speicher, in dem jedes RAM-Segment eine uniforme dritte Vielzahl aus C1-Codewörtern beherbergt, die uniform über die genannte erste Vielzahl aus Spuren, die ausschließlich zu einem einzigen Mediumsegment gehören, verteilt sind, so daß jedes Speichermediumsegment 1:1 auf ein RAM-Segment paßt, und weiterhin mit ersten Decodierungsmitteln versehen, um beim Füllen jedes Speichersegments unmittelbar das Decodieren eines beliebigen in dem Speichersegment verfügbaren C1-Codewortes zu aktivieren.

22. Decodiereinrichtung nach Anspruch 21, bei der beim Speichern die genannten C2-Codewörter Segmentgrenzen innerhalb des Speichers bis zu einer dritten Vielzahl von Speichersegmenten, aber keine anderen Segmentgrenzen innerhalb des Speichers überqueren und das genannte Gerät zweite Decodierungsmittel hat, um nach dem Speichern der C2-Codewörter in der dritten Vielzahl von Speichersegmenten und dem Decodieren durch die ersten Decodierungsmittel das Decodieren der C2-Codewörter zu aktivieren.

23. Decodiereinrichtung nach Anspruch 22, bei der der genannte Speicher zusätzlich zu der genannten dritten Vielzahl von Speichersegmenten ein einziges weiteres Eingabesegment zum Eingeben von Daten eines Speichermediumsegments und eines zweiten weiteren Segments beherbergt, um daraus Daten eines bereits decodierten Speichermediumsegments auszugeben.

24. Informationswiedergabegerät mit einer Decodiereinrichtung nach einem der Ansprüche 18 bis 23, Halte- und Ansteuerungsmitteln für das genannte Speichermedium in Form eines Magnetbandes, Kopfmitteln, um zeitsequentiell auf eine Länge von Stellen auf dem genannten Band zuzugreifen, und mit von der genannten Decodiereinrichtung gespeisten Audiowiedergabemitteln.

25. Magnetband zur Verwendung mit einer Decodiereinrichtung nach einem der Ansprüche 19 bis 23 oder mit einem Gerät nach Anspruch 24, und mit der genannten ersten Vielzahl von im wesentlichen uniformen Speicherspuren, wobei diese Spuren einen Speicherrahmen umfassen, der über die parallelen Spuren, die einseitig auf einer Hälfte des Magnetbandes liegen, gleich verteilt ist, wobei der genannte Rahmen durch einen symbolkorrigierenden Blockproduktcode geschützt wird, wie er von C1-Wörtern und C2-Wörtern repräsentiert wird, wobei jedes Cl-Wort innerhalb genau einer der genannten Spuren liegt, jedes C2-Wort über alle diese Spuren verteilt wird, indem das genannte C2-Wort eine Anzahl Symbole hat, die eine genaue Vielfachheit der genannten Vielzahl von Spuren ist, und wobei die Symbole der genannten Vielzahl von Spuren gemäß einem mehrfach wiederholten und uniformen Zyklus entlang ihren speziellen C2-Codewörtern zugewiesen werden, und indem der physikalische Zwischenabstand zwischen benachbarten Symbolen des letzteren C2-Wortes im wesentlichen uniform ist und Komponenten ungleich null sowohl entlang den Spuren als auch quer zu den Spuren hat.

26. Speichermedium nach Anspruch 25, bei dem der genannte Rahmen für jede seiner Spuren eine uniforme Anzahl von Blöcken umfaßt, die bei nicht vorhandenem Bandschräglauf in synchronisierten Abschnitten organisiert sind, wobei Symbole eines beliebigen C2-Wortes einen Abschnittsprung eines einzelnen Abschnittes und einen Sprung, quer zur Spur, einer uniformen dritten Anzahl von Spuren modulo der Anzahl der genannten Vielzahl erfahren.

27. Speichermedium nach Anspruch 26, bei dem die genannten Blöcke im wesentlichen quadratische Gebiete auf dem genannten Band einnehmen.

28. Speichermedium nach Anspruch 26, bei dem jedes C2-Wort aus einer Anzahl von Symbolen besteht, die gleich der Anzahl Blöcke in einem beliebigen Einzelspurteil eines Bandrahmens ist.

29. Speichermedium nach Anspruch 28, bei dem jeder Block aus einer uniformen Anzahl von C1-Codewörtern besteht.

30. Speichermedium nach Anspruch 29, bei dem die genannten C1-Codewörter 2-verschachtelt sind.

31. Speichermedium nach einem der Ansprüche 25 bis 30 und in einer Kassette enthalten, die mit einem Gerät nach Anspruch 24 gekoppelt ist.

## Revendications

1. Dispositif de stockage pour stocker des données numériques sur un support de stockage présentant une première pluralité de pistes de stockage en substance uniformes et contiguës en exécutant une opération de codage de protection contre les erreurs à l'aide d'un code bloc composé de mots de code C1 dans une première direction et de mots de code C2 dans une seconde direction, ce dispositif comportant des premiers moyens de codage pour le premier code pour générer des mots de code C1 protégés contre les erreurs qui sont chacun affectés à une seule piste particulière, des seconds moyens de codage pour le second code pour générer des mots de code C2 protégés contre les erreurs qui sont chacun affectés à toutes les pistes de la première pluralité ainsi que des moyens pour séparer les symboles d'un mot de code, caractérisé en ce que tous les symboles d'utilisateur et les symboles redondants des mots de code C1 et des mots de code C2, ont une dimension multibit uniforme, en ce que ledit code bloc est un code produit, en ce que chaque mot de code C2 comporte un nombre de symboles qui est un multiple exact de la première pluralité de pistes, ces symboles étant affectés à ladite première pluralité de pistes conformément à un cycle de multiplication récurrent et uniforme le long de leurs mots de code C2 particuliers et en ce que ledit dispositif comporte des moyens physiques permettant de disposer chaque mot de code C2 de façon telle que, parmi les symboles de ce dernier mot de code C2, les espacements entre des symboles physiquement voisins soient en substance uniformes en dimensions et présentent des composantes différentes de zéro tant le long des pistes qu'en travers des pistes.

2. Dispositif suivant la revendication 1, dans lequel parmi les composantes différentes de zéro, la composante traversant la piste est obtenue à partir d'un saut uniforme en travers de la piste entre des symboles successifs dudit mot de code C2 qui est un nombre entier de pistes modulo ladite première pluralité, ce nombre entier étant aussi relativement premier par rapport à ladite première pluralité.

3. Dispositif suivant la revendication 2, dans lequel la composante suivant la piste est obtenue à partir d'un saut uniforme le long de la piste entre des symboles successifs dudit mot de code C2.

4. Dispositif suivant la revendication 1, 2 ou 3, comportant des moyens d'écriture pour l'inscription magnétique en parallèle sur les pistes qui sont des pistes de bande.

5. Dispositif suivant la revendication 4, dans lequel les moyens d'écriture sont interfacés avec la pluralité de pistes en tant que pistes mutuellement contiguës.

6. Dispositif suivant la revendication 5, dans lequel la première pluralité de pistes est disposée sur la moitié de la bande et, dans les confins de la première pluralité de pistes, une piste de bord extérieur de ladite bande est entièrement remplie de symboles de parité qui appartiennent chacun à un mot de code C2 associé.

7. Dispositif suivant l'une quelconque des revendications 1 à 6, dans lequel chaque piste comporte une séquence de blocs où chaque bloc contient un nombre entier uniforme de mots de code C1.

8. Dispositif suivant la revendication 7, dans lequel ledit nombre entier est 2 et les mots de code C1 dans chaque bloc sont entrelacés par 2.

9. Dispositif suivant l'une quelconque des revendications 1 à 8, dans lequel abstraction faite de l'obliquité de la bande, la disposition physique des mots C1 parmi ladite première pluralité de pistes est mutuellement synchrone.

10. Dispositif suivant la revendication 7 ou 8, dans lequel abstraction faite de l'obliquité de la bande, la disposition physique des blocs parmi ladite première pluralité de pistes les rend mutuellement synchrones et sur chaque piste, une deuxième pluralité de blocs est contenue dans un segment de bande de dimensions uniformes, une troisième pluralité de segments de bande est contenue dans une trame de bande d'une seconde dimension uniforme, lesdits segments de bande et trames de bande étant mutuellement synchrones parmi ladite première pluralité de pistes et tout mot de code C2 est entièrement contenu dans une seule trame de bande.

11. Dispositif suivant la revendication 10, dans lequel des blocs mutuellement synchrones parmi les pistes constituent une tranche qui comporte un seul bloc par piste et dans lequel chaque mot de code C2 est uniformément réparti sur toutes les tranches d'une trame.

12. Dispositif suivant la revendication 10 ou 11, et comportant une mémoire de codage RAM permettant le stockage d'une quatrième pluralité de segments de bande à savoir un segment de RAM d'entrée destiné à recevoir des données d'utilisateur d'un segment de bande prévu, une autre série de segments de RAM destinée à stocker des données d'utilisateur d'un jeu correspondant de segments de bande prévu et à coder des mots de code C1 et C2 associés, ainsi qu'un segment de RAM de sortie destiné à en sortir un segment de bande entièrement codé.

13. Dispositif suivant l'une quelconque des revendications 1 à 12, dans lequel ladite première pluralité est égale à huit.

14. Dispositif suivant l'une quelconque des revendications 1 à 13, dans lequel le code C1 est un code (24, 20, 5) et le code C2 est un code (32, 26, 7).

15. Dispositif suivant l'une quelconque des revendications 1 à 14, dans lequel chaque trame comporte 384 mots de code C2.

16. Dispositif suivant l'une quelconque des revendications 1 à 15, dans lequel la composante différente de zéro en travers des pistes dérive d'un saut +5 modulo ladite première pluralité.

17. Dispositif suivant l'une quelconque des revendications 1 à 16, dans lequel ledit support de stockage est un support de stockage réversible.

18. Dispositif suivant l'une quelconque des revendications 1 à 17, comprenant en outre des moyens de réception pour un signal audioanalogique, des moyens de conversion analogiques/numériques alimentés par les moyens de réception pour, à l'aide d'une conversion analogique/numérique, fournir au moins une partie substantielle des données numériques en vue du codage ultérieur par le code produit.

19. Dispositif de décodage à utiliser avec ledit dispositif de stockage comportant une première pluralité de pistes en substance uniformes suivant l'une quelconque des revendications 1 à 18, ce dispositif comprenant des moyens d'accès pour l'accès audit support de stockage, des moyens de stockage internes pour recevoir toutes les données contenues dans un premier groupe de mots de code C1 et dans un second groupe de mots de code C2, ce premier et ce second groupes constituant ensemble le plus petit bloc de code produit, des premiers moyens de décodage pour décoder lesdits mots de code C1 dans le premier mot, des seconds moyens de décodage pour ensuite décoder les mots de code C2 dans le second groupe et les seconds moyens de décodage disposant de moyens d'accès pour, lors du décodage d'un quelconque mot de code C2 particulier, accéder au moyen de stockage en correspondant à des positions physiques sur le support qui présentent de distances de voisin à voisin en substances uniformes, toute distance de ce type comportant des composantes différentes de zéro tant suivant les pistes qu'en travers des pistes, tandis que les symboles du mot de code C2 sont affectés à toutes les pistes de la pluralité, conformément à un cycle récurrent suivant des symboles successifs d'un mot de code C2 quelconque particulier, du fait que tout mot de code présente un nombre de symboles qui est un multiple exact de ladite pluralité de pistes.

20. Dispositif de décodage à utiliser avec un dispositif suivant l'une quelconque des revendications 1 à 19, ou en tant que partie d'un dispositif suivant la revendication 19, comprenant une mémoire RAM multisegmentaire, des moyens de remplissage pour remplir séquentiellement une deuxième pluralité prédéterminée de segments de RAM à l'aide de données provenant dudit support de stockage réel ou émulé, où tout mot de code C1 est exclusivement affecté à un seul segment de RAM et tout mot de code C2 est exclusivement affecté à une seule trame de RAM multisegmentaire, du fait que chaque mot de code C2 parcourt par un saut de rangées uniforme et un saut de colonnes uniforme ladite trame de RAM modulo les dimensions de ladite trame de RAM.

21. Dispositif de décodage suivant la revendication 19 ou 20, qui comprend une mémoire RAM multisegmentaire où chaque segment de RAM accepte une troisième pluralité uniforme de mots de code C1 uniformément répartis parmi ladite première pluralité de pistes comme se rapportant exclusivement à un seul segment de support, de sorte que tout segment de support de stockage s'adapte 1:1 sur un segment de RAM, étant entendu que sont en outre prévus des premiers moyens de décodage pour, lors du remplissage de chaque segment de mémoire, activer directement le décodage de tout mot de code C1 disponible dans ledit segment de mémoire.

22. Dispositif de décodage suivant la revendication 21, dans lequel, lors du stockage, lesdits mots de code C2 franchissent les limites du segment intra-mémoire, jusqu'à une troisième pluralité de segments de mémoire, mais pas d'autres limites de segments intra-mémoires, ledit appareil comportant des seconds moyens de décodage pour, après le stockage desdits mots de code C2 dans ladite troisième pluralité de segments de mémoire et le décodage par lesdits premiers moyens de décodage, activer le décodage desdits mots de code C2.

23. Dispositif de décodage suivant la revendication 22, dans lequel ladite mémoire accepte en plus de ladite troisième pluralité de segments de mémoire un autre segment d'entrée pour introduire des données d'un segment de support de stockage et un second autre segment en vue de sortir des données d'un segment de support de stockage déjà décodé.

24. Appareil de reproduction d'information contenant un dispositif de décodage suivant l'une quelconque des revendications 18 à 23, des moyens de maintien/entraînement pour ledit support de stockage ayant la forme d'une bande magnétique, de moyens à tête pour accéder séquentiellement dans le temps à une série d'emplacements sur la bande et des moyens de reproduction audioalimentés par ledit dispositif de décodage.

25. Bande magnétique à utiliser avec un dispositif de décodage suivant l'une quelconque des revendications 19 à 23, ou avec un appareil suivant la revendication 24 et comprenant ladite première pluralité de pistes de stockage en substance uniformes, ces pistes comprenant une trame de stockage qui est également répartie sur lesdites pistes parallèles qui sont disposées par une face sur une moitié de ladite bande magnétique, ladite trame étant protégée par un code produit en bloc de correction de symbole tel que représenté par des mots C1 et des mots C2, chaque mot Cl étant disposé dans exactement une de ces pistes et chaque mot C2 étant disposé sur toutes les pistes du fait que le mot C2 présente un nombre de symboles qui est un multiple exact de ladite première pluralité de pistes, ces symboles étant affectés à ladite pluralité de pistes conformément à un cycle de multiplication récurrent et uniforme suivant leur mot de code C2 particulier et du fait qu'un espacement physique entre des symboles voisins de ce dernier mot C2 est en substance uniforme et présente des composantes différentes de zéro tant le long des pistes qu'en travers de ces pistes.

26. Support de stockage suivant la revendication 25, dans lequel ladite trame comporte pour chacune de ses pistes un nombre uniforme de blocs qui en l'absence d'obliquité de bande, sont organisés en tranches synchronisées, des symboles d'un mot C2 particulier quelconque accusant un saut de tranche d'une tranche et un saut en travers de piste d'un troisième nombre uniforme de pistes modulo le numéro de ladite pluralité.

27. Support de stockage suivant la revendication 26, dans lequel les blocs occupent des zones en substance carrées sur la bande.

28. Support de stockage suivant la revendication 26, dans lequel chaque mot C2 consiste en un nombre de symboles qui est égal au nombre de blocs dans une partie quelconque à une seule piste d'une trame de bande.

29. Support de stockage suivant la revendication 28, dans lequel chaque bloc consiste en un nombre uniforme de mots de code C1.

30. Support de stockage suivant la revendication 29, dans lequel les mots de code C1 sont entrelacés par deux.

31. Support de stockage suivant l'une quelconque des revendications 25 à 30, contenu dans une cassette présentant une interface avec un appareil suivant la revendication 24.
